(19) Europäisches Patentamt / European Patent Office / Office européen des brevets

(11) **EP 3 807 691 B1**

(12) **FASCICULE DE BREVET EUROPEEN**

(45) Date de publication et mention de la délivrance du brevet:
**06.12.2023 Bulletin 2023/49**

(21) Numéro de dépôt: **19728448.2**

(22) Date de dépôt: **07.06.2019**

(51) Classification Internationale des Brevets (IPC):
**G02B 23/02** *(2006.01)*      **F41G 1/32** *(2006.01)*
**G02B 23/12** *(2006.01)*

(52) Classification Coopérative des Brevets (CPC):
**G02B 23/12; F41G 1/32; G02B 23/02**

(86) Numéro de dépôt international:
**PCT/EP2019/064916**

(87) Numéro de publication internationale:
**WO 2019/238552 (19.12.2019 Gazette 2019/51)**

(54) **JUMELLES DE VISION DE NUIT PANORAMIQUES**

PANORAMANACHTSICHT-FERNGLAS

PANORAMIC NIGHT VISION BINOCULARS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2018 FR 1800613**

(43) Date de publication de la demande:
**21.04.2021 Bulletin 2021/16**

(73) Titulaire: **THALES**
**92400 Courbevoie (FR)**

(72) Inventeurs:
• **COUMERT, Bruno**
**42570 Saint Heand (FR)**
• **NARCY, Gabriel**
**42570 Saint Heand (FR)**
• **ESPIE, Jean-Luc**
**69440 Mornant (FR)**

(74) Mandataire: **Atout PI Laplace**
**Immeuble "Visium"**
**22, avenue Aristide Briand**
**94117 Arcueil Cedex (FR)**

(56) Documents cités:
**WO-A1-89/04008        FR-A1- 2 721 719**
**FR-A1- 2 863 718        US-A1- 2004 004 584**
**US-A1- 2004 021 938**

**Description**

Le domaine de l'invention est celui des jumelles de vision de nuit comportant un intensificateur de lumière.

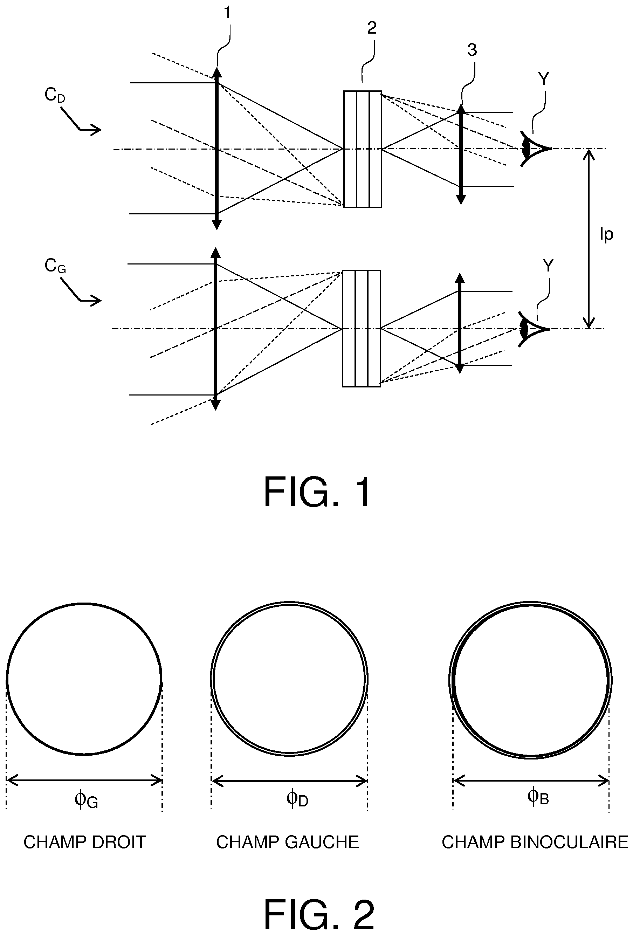

Généralement, comme représenté sur la figure 1, une jumelle de vision de nuit comporte deux corps identiques $C_D$ et $C_G$, parallèles entre eux et mécaniquement accouplés. Chaque corps comporte un objectif optique 1, un tube à intensificateur de lumière 2 et un oculaire 3. Sur cette figure, les optiques sont représentées par des flèches doubles et le parcours des rayons par des traits fins continus ou en pointillés. Le grandissement de la jumelle est égal ou voisin de 1. La distance séparant les deux corps correspond à la distance interpupillaire Ip, soit environ 65 millimètres.

Les champs de vision monoculaires $\phi_G$ et $\phi_D$ de chaque corps ont un diamètre angulaire généralement voisin de 40 degrés. Si les axes optiques des deux corps de jumelle sont parallèles, le champ binoculaire $\phi_B$ vaut également 40 degrés comme on le voit sur la figure 2. Il est difficile d'augmenter ce champ sans diminuer la résolution du système optique. En effet, plus les champs sont importants, plus la distorsion des optiques en bord de champ est importante et plus la résolution diminue en bord de champ.

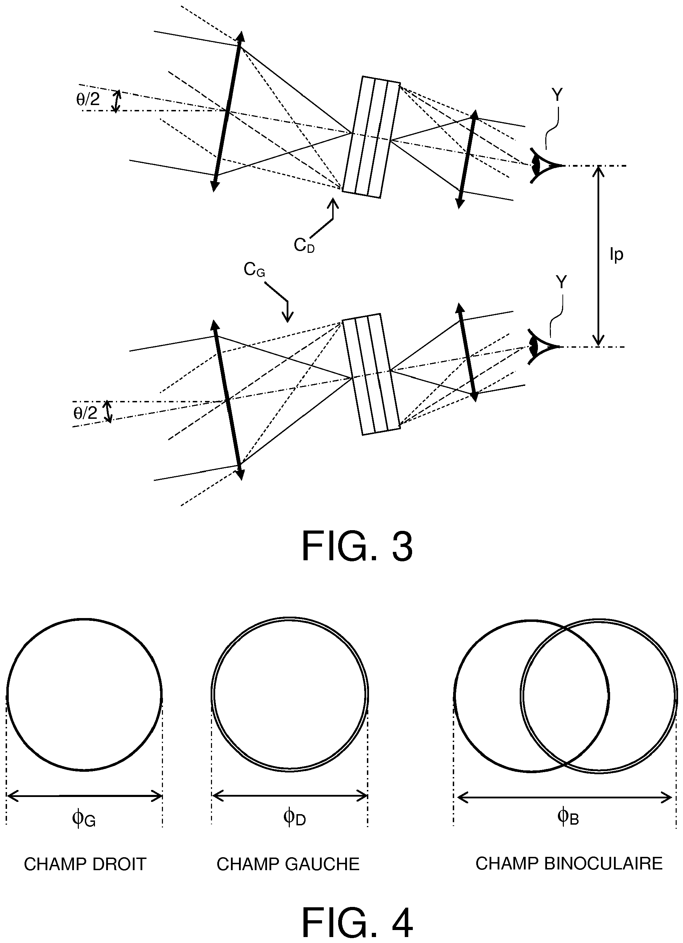

Pour augmenter le champ binoculaire, une solution possible est représentée sur les figures 3 et 4. Elle consiste à basculer les deux axes optiques de chaque corps $C_D$ et $C_G$ d'un demi-angle connu $\theta/2$ comme on le voit sur la figure 3. Les champs monoculaires $\phi_G$ et $\phi_D$ sont conservés, mais le champ binoculaire $\phi_B$, dans la direction de basculement est augmenté de l'angle $\theta$. Ainsi, si les champs monoculaires sont circulaires et d'un diamètre de 40 degrés et l'angle de basculement vaut 20 degrés, le champ binoculaire est de 60 degrés dans la direction de basculement. Le champ visuel est dit dichoptique.

Cette solution simple a plusieurs inconvénients. L'entre-axe entre les pupilles d'entrée des deux objectifs augmente de façon significative, ce qui modifie sensiblement l'effet stéréoscopique naturel. Ceci est vrai aussi bien pour une solution à champ divergent comme représenté sur la figure 3 qu'une solution à champ convergent. Ainsi, si chaque corps a une longueur d'environ 100 mm, l'entre-axe augmente de 32 mm, soit un entre-axe total de 97 mm pour une augmentation de champ total de 60°. Cela revient à augmenter l'écart interpupillaire de 50%.

Pour pallier cet inconvénient, le brevet FR 2 721 719 intitulé « Jumelle compacte de vision nocturne » propose de replier les optiques au moyen de miroirs internes de façon à diminuer l'entre-axe entre les objectifs. Cette solution optique a nécessairement ses limites. Des jumelles conventionnelles sont divulguées dans le document US 2004 / 021938.

Les jumelles selon l'invention n'ont pas les inconvénients précédents. Les oculaires et/ou les objectifs comportent des miroirs de repli plan internes permettant de maintenir l'encombrement des différentes optiques au tour d'un axe mécanique moyen. On obtient ainsi les bénéfices d'un champ binoculaire dichoptique tout en maintenant les jumelles dans un encombrement raisonnable.

Plus précisément, l'invention a pour objet des jumelles de vision de nuit comportant au moins deux premiers corps assemblés optiquement identiques, chaque premier corps comportant un premier objectif, un premier dispositif à intensificateur de lumière et un premier oculaire, chaque corps comportant un axe mécanique, les deux axes mécaniques étant parallèles entre eux et distants d'un écart interpupillaire, caractérisé en ce que, pour chaque corps, tout ou partie de l'axe optique du premier objectif fait avec l'axe mécanique un premier angle différent de zéro, le premier objectif étant centré sur l'axe mécanique, le premier oculaire comportant au moins deux miroirs plans de repli parallèles entre eux de façon que l'axe optique de l'oculaire soit en trois parties, une première partie située avant les deux miroirs plans et dans le prolongement de l'axe optique du premier objectif, une seconde partie située entre les deux miroirs plans et une troisième partie située après les deux miroirs plans et parallèle à la première partie, la distance entre les deux miroirs étant telle que la pupille de sortie du premier oculaire est centrée sur l'axe mécanique.

L'invention a également pour objet des jumelles de vision de nuit comportant au moins deux premiers corps assemblés optiquement identiques, chaque premier corps comportant un premier objectif, un premier dispositif à intensificateur de lumière et un premier oculaire, chaque corps comportant un axe dit mécanique, les deux axes mécaniques étant parallèles entre eux et distants d'un écart interpupillaire, caractérisé en ce que, pour chaque premier corps,

- Le premier objectif comporte un premier miroir plan, l'axe optique du premier objectif étant en deux parties, une première partie située avant ledit premier miroir plan et faisant avec l'axe mécanique un second angle différent de zéro, une seconde partie située après ledit miroir plan,
- Le premier oculaire comporte un second, un troisième et un quatrième miroirs plans de repli parallèles entre eux de façon que l'axe optique de l'oculaire soit en quatre parties, une première partie située avant le second miroir plan et dans le prolongement de la seconde partie de l'axe optique du premier objectif, une seconde partie située entre le second miroir plan et le troisième miroir plan, une troisième partie située entre le troisième miroir plan et le quatrième miroir plan, une quatrième partie située après les miroirs plans et parallèle à la première partie de l'axe optique du premier objectif, les distances entre les différents miroirs étant telles que la pupille de sortie de l'oculaire est centrée sur l'axe mécanique.

Avantageusement, le premier miroir et le second miroir constituent deux faces parallèles d'une première structure rhomboédrique et en ce que le troisième miroir et le quatrième miroir constituent deux faces parallèles d'une seconde structure rhomboédrique.

Avantageusement, la jumelle de vision de nuit comporte deux seconds corps optiquement identiques, chaque second corps étant assemblé avec un des deux premiers corps, chaque second corps comportant un second objectif, un second dispositif à intensificateur de lumière et un second oculaire ayant un axe optique commun, ledit axe optique commun étant confondu avec l'axe mécanique.

Avantageusement, l'oculaire est à transport d'images, c'est-à-dire qu'il comporte au moins deux modules optiques, le premier module optique faisant de la face arrière du dispositif à intensificateur de lumière une première image et un second module optique faisant de cette première image une seconde image à l'infini.

Avantageusement, le second angle est disposé dans un plan comportant les deux axes mécaniques.

Avantageusement, le second angle a une composante dans un plan perpendiculaire au plan comportant les deux axes mécaniques.

Avantageusement, le champ de chaque objectif est circulaire, son diamètre étant compris entre 40 degrés et 60 degrés.

Avantageusement, le premier angle est compris entre 10 degrés et 20 degrés.

Avantageusement, le champ binoculaire des jumelles est compris entre 60 degrés et 90 degrés dans une direction et entre 40 degrés et 60 degrés dans la direction perpendiculaire.

Avantageusement, le second angle est compris entre 30 degrés et 40 degrés.

Avantageusement, le champ binoculaire des jumelles est compris entre 120 degrés et 130 degrés dans une direction et est égal à 50 degrés dans la direction perpendiculaire.

L'invention sera mieux comprise et d'autres avantages apparaîtront à la lecture de la description qui va suivre donnée à titre non limitatif et grâce aux figures annexées parmi lesquelles :

La figure 1 représente une réalisation de jumelles de vision de nuit selon l'art antérieur ;
La figure 2 représente les champs visuels monoculaire et binoculaire des jumelles de la figure 1 ;
La figure 3 représente une variante de réalisation des jumelles de vision de nuit de la figure 1 ;
La figure 4 représente les champs visuels monoculaire et binoculaire des jumelles de la figure 3 ;
La figure 5 représente une première réalisation d'un premier corps de jumelles de vision de nuit selon l'invention ;
La figure 6 représente des jumelles comportant deux corps de jumelle tels que représentés sur la figure 5 ;
La figure 7 représente une seconde réalisation d'un premier corps de jumelles de vision de nuit selon l'invention ;
La figure 8 représente des jumelles comportant deux corps de jumelle tels que représentés sur la figure 7 ;
La figure 9 représente le champ visuel binoculaire des jumelles de la figure 8 ;
La figure 10 représente une troisième réalisation d'un ensemble monoculaire comportant un premier corps de jumelle et un second corps de jumelle ;
La figure 11 représente des jumelles de vision de nuit comportant deux ensembles monoculaires tels que représentés sur la figure 10 ;
La figure 12 représente le champ visuel binoculaire des jumelles de la figure 11 ;
La figure 13 représente le champ visuel binoculaire dans une variante de réalisation des jumelles de la figure 11 ;
La figure 14 représente une vue en perspective de ladite variante de réalisation des jumelles de vision de nuit de la figure 11.

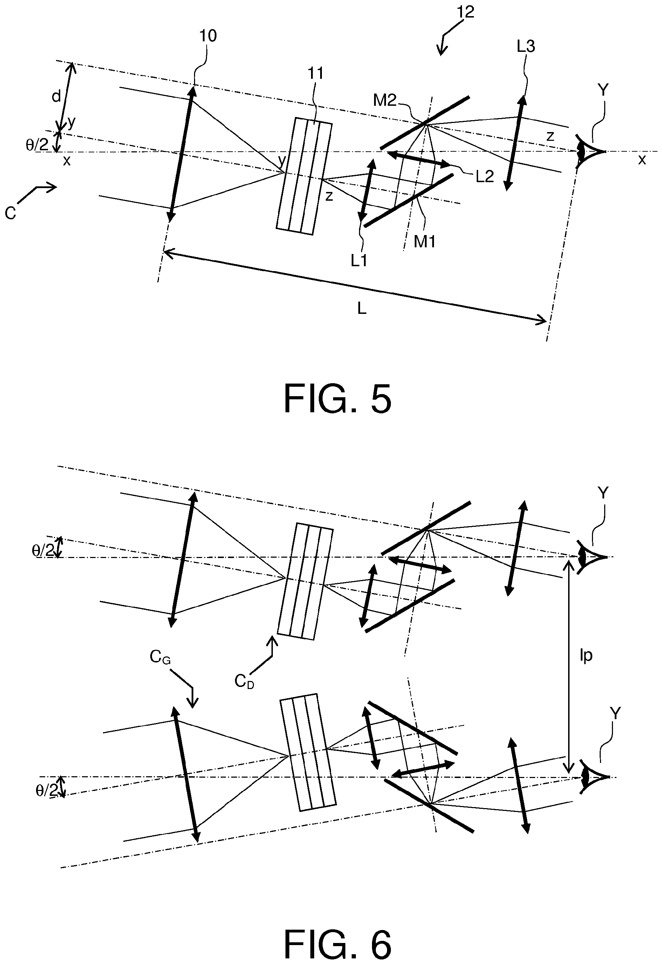

La figure 5 représente une première réalisation d'un premier corps de jumelles de vision de nuit selon l'invention. Sur cette figure et les suivantes, on a adopté les conventions suivantes. Les optiques sont représentées par des flèches doubles en traits gras, les miroirs par des segments en traits gras, les rayons lumineux par des traits fins.

Ce premier corps comporte un premier objectif 10, un premier dispositif à intensificateur de lumière 11 et un premier oculaire 12, le corps comporte un axe mécanique xx.

L'axe optique yy du premier objectif fait avec cet axe mécanique un premier angle $\theta/2$ différent de zéro, le premier objectif étant centré sur l'axe mécanique.

Le premier oculaire 12 est à transport d'images, c'est-à-dire qu'il comporte deux modules optiques, le premier module optique représenté par les optiques L1 et L2 faisant de la face arrière du dispositif à intensificateur de lumière une première image et le second module optique représenté par l'optique L3 faisant de cette première image une seconde image à l'infini. Cette solution a deux avantages. Elle permet de redresser l'image intensifiée issue du dispositif à intensificateur. Elle donne plus de liberté au niveau de la conception de l'ensemble oculaire-miroirs de renvoi.

Cet oculaire comporte deux miroirs M1 et M2 plans de repli parallèles entre eux de façon que l'axe optique zz de l'oculaire soit en trois parties, une première partie située avant les deux miroirs plans et dans le prolongement de l'axe optique yy du premier objectif, une seconde partie située entre les deux miroirs plans et une troisième partie située après les deux miroirs plans et parallèle à la première partie, la distance d du coude entre les deux miroirs étant telle que la pupille de sortie du premier oculaire est centrée sur l'axe mécanique. Les différents modules optiques sont disposés avant, entre et après les deux miroirs de repli.

Avec cette disposition, l'axe optique du corps peut être différent de son axe mécanique, les différents éléments du corps restant centrés sur l'axe mécanique. Ainsi, si on accouple deux corps de ce type pour réaliser une jumelle de vision de nuit telle que représentée en figure 6, l'encombrement total reste celui d'une jumelle de nuit dont les axes optiques seraient parallèles mais avec les avantages d'une jumelle à champ binoculaire dichoptique, c'est-à-dire élargi dans le plan comportant les deux axes mécaniques. La distance entre les deux axes mécaniques est égale à la distance interpupillaire $I_P$.

De façon à optimiser l'effet stéréoscopique naturel, il est préférable que la distance D séparant les pupilles des deux objectifs soit égale ou voisine de la distance Ip séparant les pupilles des deux oculaires. En appelant L la distance séparant la pupille de l'objectif de celle de l'oculaire, on a la relation :

$$D = Ip + 2.\left( L.\sin\left(\frac{\theta}{2}\right) - d.\cos\left(\frac{\theta}{2}\right) \right)$$

Si les distances D et Ip sont égales, alors la distance d vérifie la relation :

$$d = L.\tan\left(\frac{\theta}{2}\right)$$

En notant Lob la distance optique entre le premier dioptre de l'objectif et l'écran du tube intensificateur et Loc la distance optique entre l'écran du tube intensificateur et la pupille de sortie de l'oculaire, on a la relation :

$$L = Lop + Loc - d$$

Soit encore :

$$d = \left( Lob + Loc \right).\frac{\tan\left(\frac{\theta}{2}\right)}{1 + \tan\left(\frac{\theta}{2}\right)} \qquad \text{Relation 1}$$

Si on appelle θm le champ monoculaire de chaque corps, le champ total T binoculaire accessible, dans un plan correspondant à celui des axes optiques et des axes mécaniques vaut :

$$T = \theta m + \theta$$

Le champ de recouvrement R est égal à :

$$R = \theta m - \theta$$

Le tableau ci-dessous donne trois exemples d'applications numériques de la mise en place d'une jumelle de vision de nuit selon l'invention.

| | Lob en mm | Loc en mm | d en mm | θm en degrés | θ en degrés | T en degrés | R en degrés |
|---|---|---|---|---|---|---|---|
| Exemple 1 | 30 | 90 | 18 | 40 | 20 | 60 | 20 |
| Exemple 2 | 35 | 100 | 28 | 60 | 30 | 90 | 30 |
| Exemple 3 | 32 | 95 | 32 | 50 | 40 | 90 | 10 |

On voit qu'avec cette disposition simple, des champs binoculaires importants peuvent être atteints. D'autres dimensionnements sont possibles incluant des dimensionnements pour lesquels la relation 1 n'est pas strictement respectée. Dans ce cas, l'effet stéréoscopique, bien que proche, reste différent de l'effet stéréoscopique naturel.

Pour atteindre des angles dichoptiques élevés tout en maintenant un encombrement raisonnable des corps de jumelles, il est nécessaire de modifier la réalisation précédente en introduisant un miroir de renvoi au niveau de l'objectif et un troisième miroir de renvoi au niveau de l'oculaire.

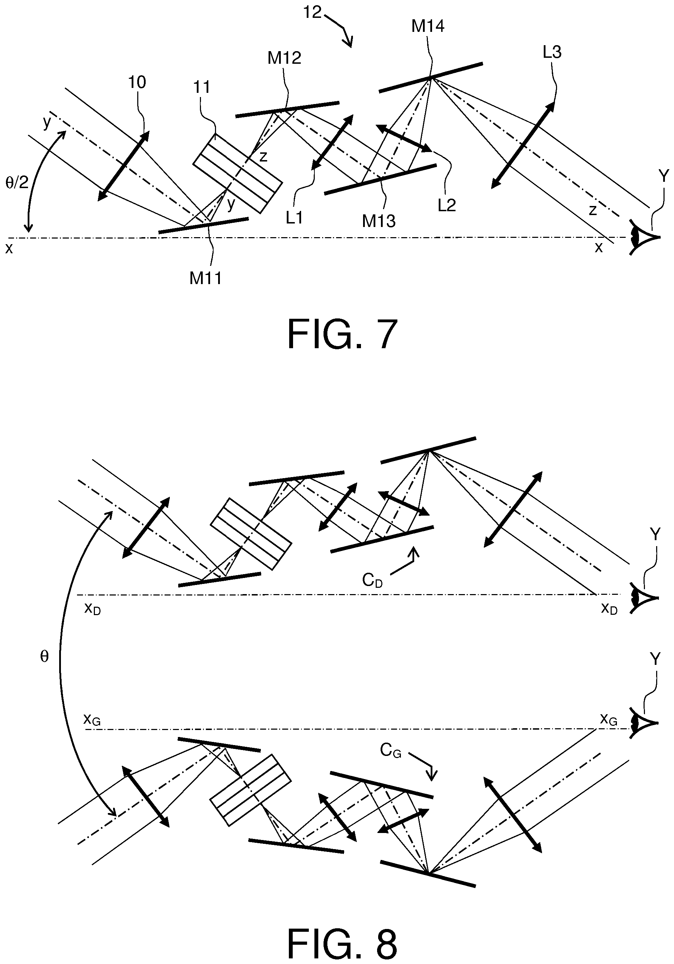

La figure 7 représente un exemple de réalisation d'un corps de jumelle selon ce second mode de réalisation. Le premier corps comporte un premier objectif 10, un premier dispositif à intensificateur de lumière 11 et un premier oculaire 12, le corps comporte un axe mécanique xx.

Le premier oculaire 12 est également à transport d'images. Ce transport est représenté par les optiques L1, L2 et L3 sur la figure 7.

Le premier objectif comporte un premier miroir plan M11, l'axe optique yy du premier objectif étant en deux parties, une première partie située avant ledit premier miroir plan M11 et faisant avec l'axe mécanique un angle $\theta/2$ différent de zéro, une seconde partie située après ledit miroir plan M11.

Le premier oculaire comporte un second miroir M12, un troisième miroir M13 et un quatrième miroir plan M14 de repli parallèles entre eux de façon que l'axe optique zz de l'oculaire soit en quatre parties, une première partie située avant le second miroir plan M12 et dans le prolongement de la seconde partie de l'axe optique yy du premier objectif 10, une seconde partie située entre le second miroir plan M12 et le troisième miroir plan M13, une troisième partie située entre le troisième miroir plan M13 et le quatrième miroir plan M14, une quatrième partie située après les miroirs plans et parallèle à la première partie de l'axe optique yy du premier objectif, les distances entre les différents miroirs étant telles que la pupille de sortie de l'oculaire est centrée sur l'axe mécanique. Les faisceaux issus du dispositif intensificateur dessinent ainsi un M à travers l'oculaire.

La figure 8 représente des jumelles comportant deux corps de jumelles $C_D$ et $C_G$ tels que représentés sur la figure 7. Leurs axes mécaniques $x_G x_G$ et $x_D x_D$ sont parallèles. Les champs visuels des objectifs font entre eux un angle $\theta$.

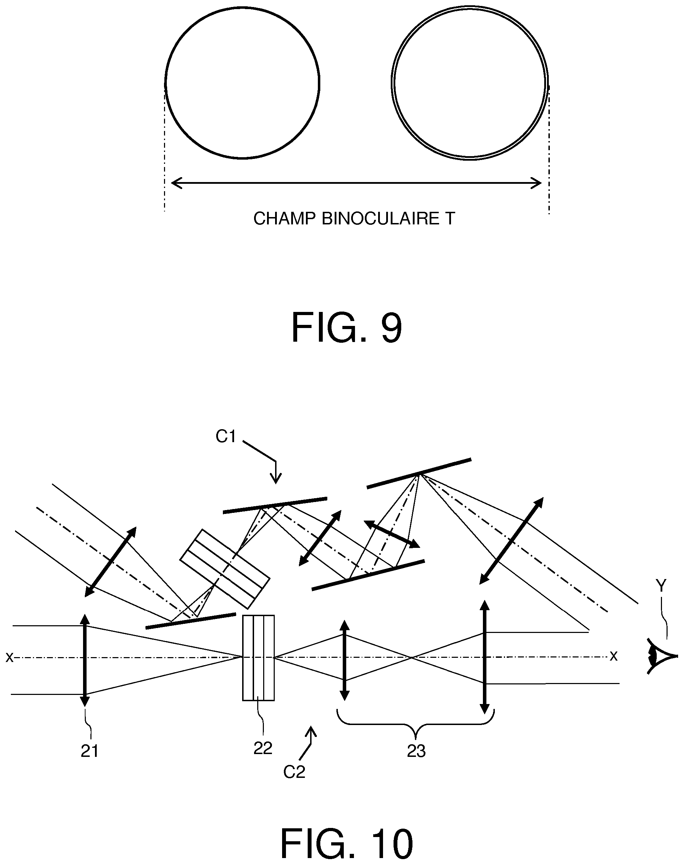

Le champ panoramique de ces jumelles est très important. Dans certaines configurations, le champ de recouvrement disparaît. Ainsi, si le champ visuel $\theta$m des corps de jumelle vaut 50 degrés et l'angle dichoptique $\theta$ vaut 75 degrés, le champ binoculaire T vaut 125 degrés et le champ de recouvrement est nul. Cette configuration est illustrée en figure 9. Le champ est alors accessible sur chaque oeil en zone périphérique si le regard est orienté suivant l'axe de symétrie du visage, ou bien en zone centrale par l'œil droit ou par l'œil gauche par la rotation du regard.

Pour obtenir un grand champ panoramique continu, la jumelle de vision de nuit comporte deux seconds corps optiquement identiques, chaque second corps étant assemblé avec un des deux premiers corps C1. La figure 10 représente une solution de ce type. Chaque second corps C2 comporte un second objectif 21, un second dispositif à intensificateur de lumière 22 et un second oculaire 23 ayant un axe optique commun, ledit axe optique commun étant confondu avec l'axe mécanique xx. L'oculaire 23 peut également être à transport d'images.

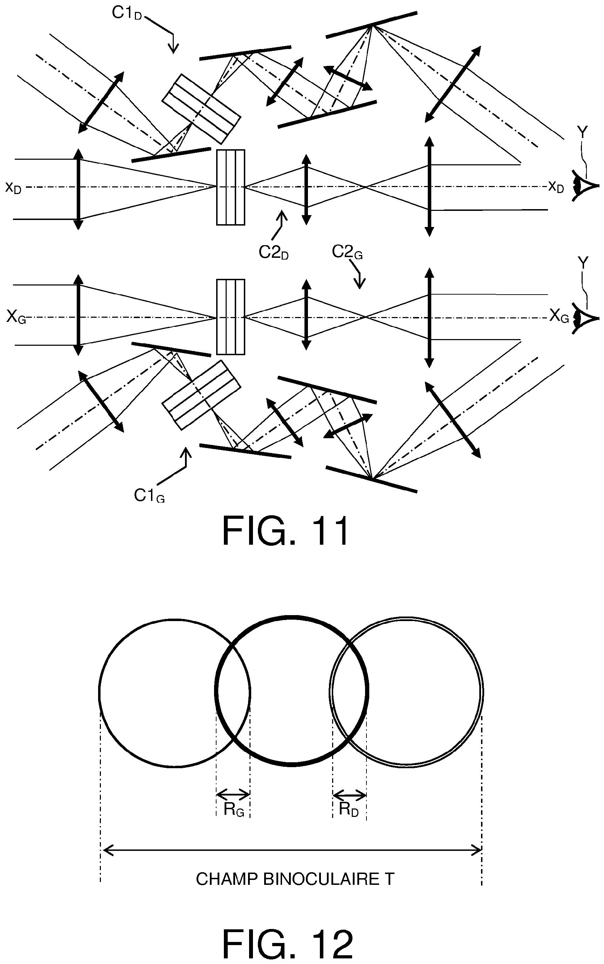

La figure 11 représente des jumelles comportant au total deux fois deux corps de jumelles $C1_D$, $C1_G$, $C2_D$ et $C2_G$ tels que représentés sur la figure 10.

Le champ panoramique binoculaire T de ces jumelles est représenté sur la figure 12. Le champ central est celui des seconds corps de jumelle. Les champs périphériques sont ceux des premiers corps de jumelles. Il existe deux champs de recouvrement latéraux $R_G$ et $R_D$ à gauche et à droite du champ central. En reprenant l'exemple précédent, si le champ visuel $\theta$m des différents corps de jumelle vaut 50 degrés et l'angle dichoptique $\theta$ vaut 75 degrés, le champ binoculaire T vaut 125 degrés et les deux champs de recouvrement $R_G$ et $R_D$ valent 12.5 degrés.

Les axes optiques et mécaniques $xx_G$ et $xx_D$ des jumelles de la figure 11 sont tous dans un même plan, essentiellement pour la clarté de la représentation.

Il est cependant préférable de situer les axes optiques des premiers corps dans un premier plan et les axes optiques des seconds corps dans un second plan parallèle de façon à obtenir une bonne continuité pupillaire entre les deux ensembles des deux corps droit et gauche dans le champ de recouvrement, compte-tenu de la rotation de l'œil. A cette fin, la structure opto-mécanique des premiers corps comporte deux structures rhomboédriques, la première structure comportant le premier miroir et le second miroir qui constituent deux faces parallèles du premier rhomboèdre, la seconde structure comportant le troisième miroir et le quatrième miroir qui constituent deux faces parallèles du second rhomboèdre. On utilise les propriétés d'invariant des rhomboèdres pour effectuer les différents repliements et coudes nécessaires.

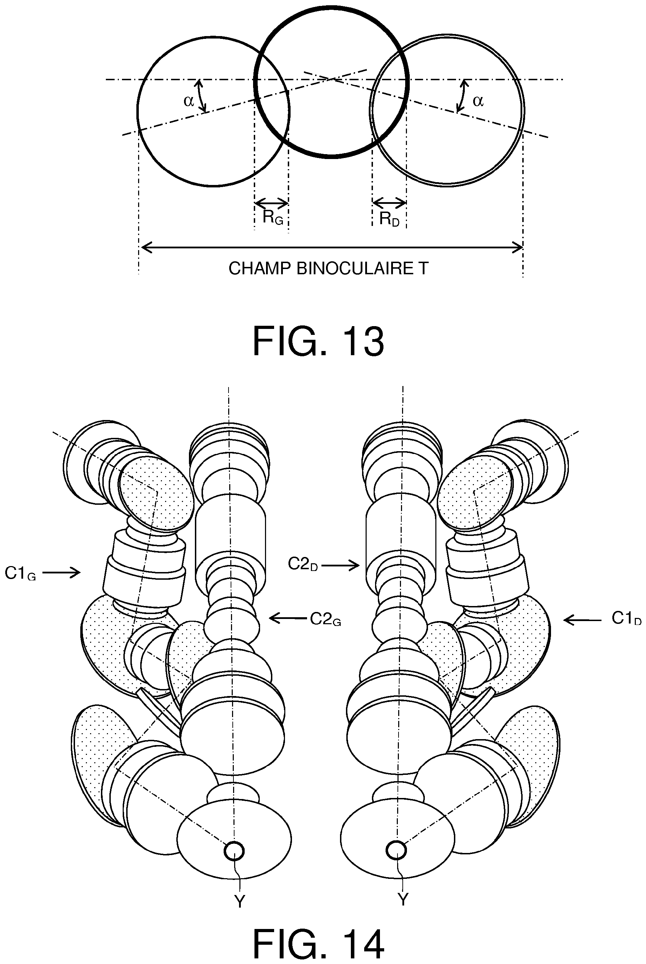

Dans ce cas, selon l'architecture opto-mécanique retenue, les champs panoramiques des premiers corps peuvent être décalés vers le bas afin de présenter un champ panoramique incurvé plus proche de la vision naturelle. La figure 13 représente un champ panoramique de ce type. A titre d'exemple, le champ visuel $\theta$m des différents corps de jumelle vaut 50 degrés, l'angle dichoptique $\theta$ vaut 75 degrés, le champ binoculaire T vaut 125 degrés, les deux champs de recouvrement valent 12.5 degrés et l'inclinaison $\alpha$ des champs panoramiques par rapport aux champs centraux vaut 15 degrés.

La figure 14 représente une vue en perspective de ce type de jumelles à quatre corps $C1_D$, $C1_G$, $C2_D$ et $C2_G$

selon l'invention. Sur cette figure, les surfaces des différents miroirs de repli sont représentées en pointillés. Les axes optiques sont représentés en traits pointillés. Les positions des yeux Y sont représentées par deux cercles en traits gras.

**Revendications**

1. Jumelles de vision de nuit comportant au moins deux premiers corps ($C_D$, $C_G$) assemblés optiquement identiques, chaque premier corps comportant un premier objectif (10), un premier dispositif à intensificateur de lumière (11) et un premier oculaire (12), chaque corps comportant un axe mécanique, les deux axes mécaniques étant parallèles entre eux et distants d'un écart interpupillaire,
**caractérisé en ce que**, pour chaque corps, tout ou partie de l'axe optique du premier objectif fait avec l'axe mécanique un premier angle différent de zéro, le premier objectif étant centré sur l'axe mécanique, le premier oculaire comportant au moins deux miroirs (M1, M2) plans de repli parallèles entre eux de façon que l'axe optique de l'oculaire soit en trois parties, une première partie située avant les deux miroirs plans et dans le prolongement de l'axe optique du premier objectif, une seconde partie située entre les deux miroirs plans et une troisième partie située après les deux miroirs plans et parallèle à la première partie, la distance entre les deux miroirs étant telle que la pupille de sortie du premier oculaire est centrée sur l'axe mécanique.

2. Jumelles de vision de nuit comportant au moins deux premiers corps ($C_D$, $C_G$) assemblés optiquement identiques, chaque premier corps comportant un premier objectif, un premier dispositif à intensificateur de lumière et un premier oculaire, chaque corps comportant un axe dit mécanique, les deux axes mécaniques étant parallèles entre eux et distants d'un écart interpupillaire, **caractérisé en ce que**, pour chaque premier corps,

   - Le premier objectif comporte un premier miroir plan (M11), l'axe optique du premier objectif étant en deux parties, une première partie située avant ledit premier miroir plan et faisant avec l'axe mécanique un second angle différent de zéro, une seconde partie située après ledit miroir plan,
   - Le premier oculaire comporte un second, un troisième et un quatrième miroirs plans (M12, M13, M14) de repli parallèles entre eux de façon que l'axe optique de l'oculaire soit en quatre parties, une première partie située avant le second miroir plan (M12) et dans le prolongement de la seconde partie de l'axe optique du premier objectif, une seconde partie située entre le second miroir plan et le troisième miroir plan (M13), une troisième partie située entre le troisième miroir plan et le quatrième miroir plan (M14), une quatrième partie située après les miroirs plans et parallèle à la première partie de l'axe optique du premier objectif, les distances entre les différents miroirs étant telles que la pupille de sortie de l'oculaire est centrée sur l'axe mécanique.

3. Jumelles de vision de nuit selon la revendication 2, **caractérisé en ce que** le premier miroir et le second miroir constituent deux faces parallèles d'une première structure rhomboédrique et **en ce que** le troisième miroir et le quatrième miroir constituent deux faces parallèles d'une seconde structure rhomboédrique.

4. Jumelles de vision de nuit selon l'une des revendications 2 ou 3, **caractérisé en ce que** la jumelle de vision de nuit comporte deux seconds corps ($C2_D$, $C2_G$) optiquement identiques, chaque second corps étant assemblé avec un des deux premiers corps, chaque second corps comportant un second objectif (21), un second dispositif à intensificateur de lumière (22) et un second oculaire (23) ayant un axe optique commun, ledit axe optique commun étant confondu avec l'axe mécanique.

5. Jumelles de vision de nuit selon l'une des revendications précédentes, **caractérisé en ce que** l'oculaire est à transport d'images, c'est-à-dire qu'il comporte au moins deux modules optiques (L1,L2, L3), le premier module optique (L1, L2) faisant de la face arrière du dispositif à intensificateur de lumière une première image et un second module optique (L3) faisant de cette première image une seconde image à l'infini.

6. Jumelles de vision de nuit selon l'une des revendications 2 à 5, **caractérisé en ce que** le second angle est disposé dans un plan comportant les deux axes mécaniques.

7. Jumelles de vision de nuit selon l'une des revendications 2 à 6, **caractérisé en ce que** le second angle a une composante dans un plan perpendiculaire au plan comportant les deux axes mécaniques.

8. Jumelles de vision de nuit selon l'une des revendications précédentes, **caractérisé en ce que** le champ de chaque objectif est circulaire, son diamètre étant compris entre 40 degrés et 60 degrés.

9. Jumelles de vision de nuit selon la revendication 1, **caractérisé en ce que** le premier angle est compris entre 10 degrés et 20 degrés.

10. Jumelles de vision de nuit selon la revendication 9, **caractérisé en ce que** le champ binoculaire des jumelles est compris entre 60 degrés et 90 degrés dans une direction et entre 40 degrés et 60 degrés dans la direction perpendiculaire.

11. Jumelles de vision de nuit selon l'une des revendications 2 à 7, **caractérisé en ce que** le second angle est compris entre 30 degrés et 40 degrés.

12. Jumelles de vision de nuit selon la revendication 9, **caractérisé en ce que** le champ binoculaire des jumelles est compris entre 120 degrés et 130 degrés dans une direction et est égal à 50 degrés dans la direction perpendiculaire.

**Patentansprüche**

1. Nachtsichtgerät, das mindestens zwei optisch identische zusammengesetzte erste Körper ($C_D$, $C_G$) aufweist, wobei jeder erste Körper ein erstes Objektiv (10), eine erste Lichtverstärkervorrichtung (11) und ein erstes Okular (12) aufweist, wobei jeder Körper eine mechanische Achse aufweist, wobei die beiden mechanischen Achsen parallel zueinander und um einen Pupillenabstand voneinander entfernt sind,
   **dadurch gekennzeichnet, dass** für jeden Körper die optische Achse des ersten Objektivs ganz oder teilweise mit der mechanischen Achse einen ersten Winkel ungleich Null bildet, wobei das erste Objektiv auf der mechanischen Achse zentriert ist, wobei das erste Okular mindestens zwei zueinander parallele Faltplanspiegel (M1, M2) aufweist, sodass die optische Achse des Okulars aus drei Teilen besteht, einem ersten Teil, der sich vor den beiden Planspiegeln und in der Verlängerung der optischen Achse des ersten Objektivs befindet, einem zweiten Teil, der sich zwischen den beiden Planspiegeln befindet, und einem dritten Teil, der sich hinter den beiden Planspiegeln und parallel zum ersten Teil befindet, wobei der Abstand zwischen den beiden Spiegeln so ist, dass die Austrittspupille des ersten Okulars auf der mechanischen Achse zentriert ist.

2. Nachtsichtgerät, das mindestens zwei optisch identische zusammengesetzte erste Körper ($C_D$, $C_G$) aufweist, wobei jeder erste Körper ein erstes Objektiv, eine erste Lichtverstärkervorrichtung und ein erstes Okular aufweist, wobei jeder Körper eine sogenannte mechanische Achse aufweist, wobei die beiden mechanischen Achsen parallel zueinander und um einen Pupillenabstand voneinander entfernt sind, **dadurch gekennzeichnet, dass** für jeden ersten Körper

   - das erste Objektiv einen ersten Planspiegel (M11) aufweist, wobei die optische Achse des ersten Objektivs aus zwei Teilen besteht, einem ersten Teil, der sich vor dem ersten Planspiegel befindet und mit der mechanischen Achse einen zweiten Winkel ungleich Null bildet, einem zweiten Teil, der sich hinter dem Planspiegel befindet,
   - das erste Okular einen zweiten, einen dritten und einen vierten Faltplanspiegel (M12, M13, M14) aufweist, die parallel zueinander liegen, sodass die optische Achse des Okulars aus vier Teilen besteht, einem ersten Teil, der sich vor dem zweiten Planspiegel (M12) und in der Verlängerung des zweiten Teils der optischen Achse des ersten Objektivs befindet, einem zweiten Teil, der sich zwischen dem zweiten Planspiegel und dem dritten Planspiegel (M13) befindet, einem dritten Teil, der sich zwischen dem dritten Planspiegel und dem vierten Planspiegel (M14) befindet, einem vierten Teil, der sich hinter den Planspiegeln und parallel zum ersten Teil der optischen Achse des ersten Objektivs befindet, wobei die Abstände zwischen den verschiedenen Spiegeln so sind, dass die Austrittspupille des Okulars auf der mechanischen Achse zentriert ist.

3. Nachtsichtgerät nach Anspruch 2, **dadurch gekennzeichnet, dass** der erste Spiegel und der zweite Spiegel zwei parallele Flächen einer ersten rhomboedrischen Struktur bilden, und dadurch, dass der dritte Spiegel und der vierte Spiegel zwei parallele Flächen einer zweiten rhomboedrischen Struktur bilden.

4. Nachtsichtgerät nach Anspruch 2 oder 3, **dadurch gekennzeichnet, dass** das Nachtsichtgerät zwei optisch identische zweite Körper ($C2_D$, $C2_G$) aufweist, wobei jeder zweite Körper mit einem der beiden ersten Körper zusammengesetzt ist, wobei jeder zweite Körper ein zweites Objektiv (21), eine zweite Lichtverstärkervorrichtung (22) und ein zweites Okular (23) mit einer gemeinsamen optischen Achse aufweist, wobei die gemeinsame optische Achse mit der mechanischen Achse zusammenfällt.

5. Nachtsichtgerät nach einem der vorhergehenden Ansprüche, **dadurch gekennzeichnet, dass** das Okular bildtransportierend ist, d. h. es weist mindestens zwei optische Module (L1, L2, L3) auf, wobei das erste optische Modul (L1, L2) von der Rückseite der Lichtverstärkervorrichtung ein erstes Bild macht und ein zweites optisches Modul (L3) aus diesem ersten Bild ein zweites Bild im Unendlichen macht.

6. Nachtsichtgerät nach einem der Ansprüche 2 bis 5, **dadurch gekennzeichnet, dass** der zweite Winkel in einer Ebene angeordnet ist, die die beiden mechanischen Achsen aufweist.

7. Nachtsichtgerät nach einem der Ansprüche 2 bis 6, **dadurch gekennzeichnet, dass** der zweite Winkel eine Komponente in einer Ebene lotrecht zu der Ebene aufweist, die die beiden mechanischen Achsen aufweist.

8. Nachtsichtgerät nach einem der vorhergehenden Ansprüche, **dadurch gekennzeichnet, dass** das Feld jedes Objektivs kreisförmig ist, wobei sein Durchmesser zwischen 40 Grad und 60 Grad liegt.

9. Nachtsichtgerät nach Anspruch 1, **dadurch gekennzeichnet, dass** der erste Winkel zwischen 10 Grad und 20 Grad liegt.

10. Nachtsichtgerät nach Anspruch 9, **dadurch gekennzeichnet, dass** das binokulare Feld des Geräts zwischen 60 Grad und 90 Grad in einer Richtung und zwischen 40 Grad und 60 Grad in der lotrechten Richtung liegt.

11. Nachtsichtgerät nach einem der Ansprüche 2 bis 7, **dadurch gekennzeichnet, dass** der zweite Winkel zwischen 30 Grad und 40 Grad liegt.

12. Nachtsichtgerät nach Anspruch 9, **dadurch gekennzeichnet, dass** das binokulare Feld des Geräts zwischen 120 Grad und 130 Grad in einer Richtung und gleich 50 Grad in der lotrechten Richtung liegt.

**Claims**

1. Night vision binoculars having at least two first optically identical assembled bodies ($C_D$, $C_G$), each first body having a first objective lens (10), a first light intensifier device (11) and a first eyepiece (12), each body having a mechanical axis, the two mechanical axes being parallel to each other and being spaced apart by an interpupillary distance, **characterised in that**, for each body, all or part of the optical axis of the first objective lens forms a first angle with the mechanical axis that is different from zero, the first objective lens being centred on the mechanical axis, the first eyepiece having at least two flat folding mirrors (M1, M2) that are parallel to each other such that the optical axis of the eyepiece is in three parts, a first part located in front of the two flat mirrors and in the extension of the optical axis of the first objective lens, a second part located between the two flat mirrors and a third part located after the two flat mirrors and parallel to the first part, the distance between the two mirrors being such that the exit pupil of the first eyepiece is centred on the mechanical axis.

2. Night vision binoculars having at least two first optically identical assembled bodies ($C_D$, $C_G$), each first body having a first objective lens, a first light intensifier device and a first eyepiece, each body having a so-called mechanical axis, the two mechanical axes being parallel to each other and spaced apart by an interpupillary distance, **characterised in that**, for each first body,

   - the first objective lens has a first flat mirror (M11), with the optical axis of the first objective lens being in two parts, a first part located in front of said first flat mirror and forming a second angle with the mechanical axis that is different from zero, a second part located after said flat mirror;
   - the first eyepiece has a second, a third and a fourth flat folding mirror (M12, M13, M14) that are parallel to each other such that the optical axis of the eyepiece is in four parts, a first part located in front of the second flat mirror (M12) and in the extension of the second part of the optical axis of the first objective lens, a second part located between the second flat mirror and the third flat mirror (M13), a third part located between the third flat mirror and the fourth flat mirror (M14), a fourth part located after the flat mirrors and parallel to the first part of the optical axis of the first objective lens, with the distances between the different mirrors being such that the exit pupil of the eyepiece is centred on the mechanical axis.

3. The night vision binoculars according to claim 2, **characterised in that** the first mirror and the second mirror form two parallel faces of a first rhombohedral structure and **in that** the third mirror and the fourth mirror form two parallel faces of a second rhombohedral structure.

4. The night vision binoculars according to any of claims 2 or 3, **characterised in that** the night vision binoculars have two second optically identical bodies ($C2_D$, $C2_G$), each second body being assembled with one of the two first bodies, each second body having a second objective lens (21), a second light intensifier device (22) and a second eyepiece (23) having a common optical axis, said common optical axis coinciding with the mechanical axis.

5. The night vision binoculars according to any of the preceding claims, **characterised in that** the eyepiece is an image-transport eyepiece, i.e., it has at least two optical modules (L1, L2, L3), the first optical module (L1, L2) making a first image of the rear face of the light intensifier device and a second optical module (L3) making a second image to infinity of this first image.

6. The night vision binoculars according to any of claims 2 to 5, **characterised in that** the second angle is arranged in a plane with the two mechanical axes.

7. The night vision binoculars according to any of claims 2 to 6, **characterised in that** the second angle has a component in a plane perpendicular to the plane with the two mechanical axes.

8. The night vision binoculars according to any of the preceding claims, **characterised in that** the field of each objective lens is circular, with its diameter ranging between 40 degrees and 60 degrees.

9. The night vision binoculars according to claim 1, **characterised in that** the first angle ranges between 10 degrees and 20 degrees.

10. The night vision binoculars according to claim 9, **characterised in that** the binocular field of the binoculars ranges between 60 degrees and 90 degrees in one direction and between 40 degrees and 60 degrees in the perpendicular direction.

11. The night vision binoculars according to any of claims 2 to 7, **characterised in that** the second angle ranges between 30 degrees and 40 degrees.

12. The night vision binoculars according to claim 9, **characterised in that** the binocular field of the binoculars ranges between 120 degrees and 130 degrees in one direction and equals 50 degrees in the perpendicular direction.

# FIG. 1

CHAMP DROIT      CHAMP GAUCHE      CHAMP BINOCULAIRE

# FIG. 2

$\theta/2$

$C_D$

$C_G$

$\theta/2$

Y

Y

Ip

# FIG. 3

$\phi_G$

$\phi_D$

$\phi_B$

CHAMP DROIT

CHAMP GAUCHE

CHAMP BINOCULAIRE

# FIG. 4

FIG. 5

FIG. 6

FIG. 7

FIG. 8

CHAMP BINOCULAIRE T

# FIG. 9

# FIG. 10

FIG. 11

CHAMP BINOCULAIRE T

FIG. 12

**CHAMP BINOCULAIRE T**

# FIG. 13

$C1_G \longrightarrow$  $C2_D \longrightarrow$  $\longleftarrow C1_D$

$\longleftarrow C2_G$

Y  Y

# FIG. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2721719
- US 2004021938 A